# EUROPEAN PATENT APPLICATION

(11) **EP 3 597 678 A1**
(43) Date of publication of application: **22.01.2020**
(21) Application number: 18766603.7
(22) Date of filing: 23.02.2018
(51) Int. Cl.: C08F 236/04, C08K 5/17, C08L 9/02

(54) **NITRILE GROUP-CONTAINING COPOLYMER RUBBER**

(30) Priority: 17.03.2017 JP 2017052604
(71) Applicant: Zeon Corporation, Tokyo 100-8246 (JP)
(72) Inventor: SHIONO, Atsuhiro, Tokyo 100-8246 (JP)
(74) Representative: Maiwald Patent- und Rechtsanwaltsgesellschaft mbH
(86) International application number: PCT/JP2018/006683
(87) International publication number: WO 2018/168395

(57) **Abstract**

The present invention provides a nitrile group-containing copolymer rubber containing 10 to 30 wt% of an α,β-ethylenically unsaturated nitrile monomer unit, 1 to 10 wt% of a fumaric acid monoester monomer unit, and 1 to 50 wt% of an α,β-ethylenically unsaturated monocarboxylic acid ester monomer unit and having an iodine value of 120 or less.

## Description

### TECHNICAL FIELD

The present invention relates to a nitrile group-containing copolymer rubber, and more specifically relates to a nitrile group-containing copolymer rubber which has high processability, and can give a cross-linked rubber having high compression set resistance when made into a cross-linked rubber.

### BACKGROUND ART

Nitrile rubber (acrylonitrile-butadiene copolymer rubber), because of its useful oil resistance, mechanical properties, resistance against chemicals, is conventionally used as a material for rubber parts such as hoses and seals for automobiles. Moreover, hydrogenated nitrile rubber (hydrogenated acrylonitrile-butadiene copolymer rubber) obtained through hydrogenation of carbon-carbon double bonds in the polymer main chain of nitrile rubber has higher mechanical properties and heat resistance, and is used for rubber parts such as belts, hoses, seals, diaphragms, and the like.

As an example of such nitrile rubber compositions, a cross-linkable nitrile rubber composition is disclosed in Patent Document 1. This rubber composition contains a highly saturated nitrile rubber (a) and a polyamine cross-linking agent (b), the highly saturated nitrile rubber comprising an α,β-ethylenically unsaturated nitrile monomer unit, an α,β-ethylenically unsaturated dicarboxylic acid monoester monomer unit, and a monomer unit of a hydrocarbon ester of an α,β-ethylenically unsaturated monocarboxylic acid where the hydrocarbon group has 3 to 10 carbon atom and having an iodine value of 120 or less. In the technique disclosed in Patent Document 1, mono-n-butyl maleate is used as the α,β-ethylenically unsaturated dicarboxylic acid monoester monomer unit (see EXAMPLES and the like). According to the description of Patent Document 1, the technique disclosed therein can provide cross-linked rubbers having low compression set and high cold resistance. The technique disclosed in Patent Document 1, however, cannot always ensure sufficient processability because a significant increase in viscosity occurs when the polyamine cross-linking agent is compounded with the highly saturated nitrile rubber. This has led to a demand for further improved processability.

### RELATED ART

### PATENT DOCUMENT

Patent Document 1: JP-A 2008-163074

### SUMMARY OF THE INVENTION

### TECHNICAL PROBLEM

The present invention has been made in consideration of such circumstances. An object of the present invention is to provide a nitrile group-containing copolymer rubber which has high processability and can give a cross-linked rubber having high compression set resistance when made into a cross-linked rubber.

### SOLUTION TO PROBLEM

As a result of intensive studies to achieve the above object, the present inventors found that a nitrile-group containing copolymer rubber comprising a specific amount of a fumaric acid monoester monomer unit in addition to specific amounts of an α,β-ethylenically unsaturated nitrile monomer unit and an α,β-ethylenically unsaturated monocarboxylic acid ester monomer unit can successfully prevent an increase in Mooney viscosity caused by compounding a polyamine cross-linking agent, leading to excellent processability. The present inventors also found that cross-linked rubbers obtained using such a copolymer rubber have excellent cold resistance. These findings have led to the completion of the present invention.

Specifically, the present invention provides a nitrile group-containing copolymer rubber comprising 10 to 30 wt% of an α,β-ethylenically unsaturated nitrile monomer unit, 1 to 10 wt% of a fumaric acid monoester monomer unit, and 1 to 50 wt% of an α,β-ethylenically unsaturated monocarboxylic acid ester monomer unit and having an iodine value of 120 or less.

Preferably, the nitrile group-containing copolymer rubber according to the present invention comprises 10 to 88 wt% of a conjugated diene monomer unit.

It is preferred that in the nitril group-containing copolymer rubber, a content of the α,β-ethylenically unsaturated nitrile monomer unit be 14 to 26 wt%, a content of the fumaric acid monoester monomer unit be 4 to 6 wt%, a content of the α,β-ethylenically unsaturated monocarboxylic acid ester monomer unit be 20 to 35 wt%, and a content of the conjugated diene monomer unit be 40 to 50 wt%.

In the nitrile group-containing copolymer rubber, a total content of α,β-ethylenically unsaturated dicarboxylic acid monoester monomer unit excluding the fumaric acid monoester monomer unit and α,β-ethylenically unsaturated polyvalent carboxylic acid monomer unit is preferably 5 wt% or less, more preferably 2 wt% or less.

The present invention also provides a cross-linkable rubber composition comprising the nitrile group-containing copolymer rubber and a polyamine cross-linking agent.

The cross-linkable rubber composition according to the present invention preferably further comprises a basic cross-linking accelerator having a cyclic amidine structure.

The present invention further provides a cross-linked rubber prepared by cross-linking the cross-linkable rubber composition.

### EFFECTS OF INVENTION

The present invention can provide a nitrile group-containing copolymer rubber which has high processability and can give a cross-linked rubber having high compression set resistance when made into a cross-linked rubber, and a cross-linked rubber which can be prepared using such a nitrile group-containing copolymer rubber and has high cold resistance.

### DESCRIPTION OF EMBODIMENTS

### Nitrile group-containing copolymer rubber

The nitrile group-containing copolymer rubber according to the present invention contains 10 to 30 wt% of an α,β-ethylenically unsaturated nitrile monomer unit, 1 to 10 wt% of a fumaric acid monoester monomer unit, and 1 to 50 wt% of an α,β-ethylenically unsaturated monocarboxylic acid ester monomer unit and has an iodine value of 120 or less.

Any α,β-ethylenically unsaturated compound having a nitrile group can be used as the α,β-ethylenically unsaturated nitrile monomer forming the α,β-ethylenically unsaturated nitrile monomer unit without limitation. Examples thereof include acrylonitrile; α-halogenoacrylonitriles such as α-chloroacrylonitrile and α-bromoacrylonitrile; α-alkylacrylonitriles such as methacrylonitrile and ethacrylonitrile; and the like. Among these, preferred are acrylonitrile and methacrylonitrile, and particularly preferred is acrylonitrile. These α,β-ethylenically unsaturated nitrile monomers may be used alone or in combination.

The proportion of the α,β-ethylenically unsaturated nitrile monomer unit contained in the nitrile group-containing copolymer rubber according to the present invention is 10 to 30 wt%, preferably 12 to 28 wt%, more preferably 14 to 26 wt% of the total monomer units. An excessively low proportion of the α,β-ethylenically unsaturated nitrile monomer unit results in a cross-linked rubber having reduced oil resistance. In contrast, an excessively high proportion thereof results in a cross-linked rubber having reduced cold resistance.

Examples of fumaric acid monoester monomers forming the fumaric acid monoester monomer unit include fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkylcycloalkyl esters such as monomethylcyclopentyl fumarate and monoethylcyclohexyl fumarate; and the like.

These fumaric acid monoester monomers may be used alone or in combination. Among these, preferred are fumaric acid monoalkyl esters and fumaric acid monocycloalkyl esters, more preferred are mono-n-butyl fumarate and monocyclohexyl fumarate, and particularly preferred is mono-n-butyl fumarate. The fumaric acid monoester monomer unit contains one unsubstituted (free) carboxyl group which is not esterified or the like. Due to the presence of the fumaric acid monoester monomer unit, the nitrile group-containing copolymer rubber contains carboxyl groups. Such carboxyl groups act as cross-linking points when combined with the polyamine cross-linking agent.

In the present invention, the fumaric acid monoester monomer is used as a monomer to introduce such carboxyl groups to the nitrile group-containing copolymer rubber, and the use thereof results in excellent processability of the nitrile group-containing copolymer rubber. Specifically, an increase in Mooney viscosity caused by compounding the polyamine cross-linking agent can be successfully prevented, leading to excellent processability.

Although the reason why the increase in Mooney viscosity can be prevented is not necessarily clarified, the amount of carboxylic anhydride groups is thought to be responsible for such an increase in Mooney viscosity. In contrast, according to the present invention, the use of a monoester of fumaric acid, which is trans-butenedioic acid, is thought to be effective in preventing generation of such carboxylic anhydride groups. Specifically, since fumaric acid monoesters have a trans configuration, the three-dimensional arrangement of the ester group and the carboxyl group tends not to allow condensation of these groups to take place. This configuration is thought to effectively prevent generation of carboxylic anhydride groups and thereby suitably prevent an increase in Mooney viscosity caused by compounding the polyamine cross-linking agent. On the other hand, monoesters of maleic acid, which is cis-butendionic acid, have a cis-configuration in which the three-dimensional arrangement of the ester group and the carboxyl group tends to allow condensation of these groups to take place, and therefore relatively frequently result in production of carboxylic anhydride groups. For this reason, presumably, the effect to prevent an increase in Mooney viscosity caused by compounding the polyamine cross-linking agent is unlikely to arise.

The proportion of the fumaric acid monoester monomer unit contained in the nitrile group-containing copolymer rubber according to the present invention is 1 to 10 wt%, preferably 2 to 8 wt%, more preferably 4 to 6 wt%. An excessively low proportion of the fumaric acid monoester monomer unit may result in a cross-linked rubber having reduced compression set resistance. An excessively high proportion of the fumaric acid monoester monomer unit may result in a cross-linked rubber having reduced mechanical properties

Examples of α,β-ethylenically unsaturated monocarboxylic acid ester monomers forming the α,β-ethylenically unsaturated monocarboxylic acid ester monomer unit include (meth)acrylic acid esters (abbreviation for "methacrylic acid esters and acrylate esters" and the same applies hereinafter) having C₁ to C₁₈ alkyl groups, such as methyl acrylate, ethyl acrylate, n-butyl acrylate, isobutyl acrylate, n-dodecyl acrylate, methyl methacrylate, and ethyl methacrylate; (meth)acrylic acid esters having C₂ to C₁₈ alkoxyalkyl groups, such as methoxymethyl acrylate, methoxyethyl acrylate, ethoxypropyl acrylate, methoxybutyl acrylate, ethoxydodecyl acrylate, methoxyethyl methacrylate, methoxybutyl methacrylate, and ethoxypentyl methacrylate; (meth)acrylic acid esters having C₂ to C₁₂ cyanoalkyl groups, such as α-cyanoethyl acrylate, α-cyanoethyl methacrylate, and cyanobutyl methacrylate; (meth)acrylic acid esters having C₁ to C₁₂ hydroxyalkyl groups, such as 2-hydroxyethyl acrylate, 2-hydroxypropyl acrylate, and 2-hydroxyethyl methacrylate; (meth)acrylic acid esters having C₁ to C₁₂ fluoroalkyl groups, such as trifluoroethyl acrylate and tetrafluoropropyl methacrylate; and the like.

Among these, preferred are (meth)acrylic acid esters having C₁ to C₁₈ alkyl groups and (meth) acrylic acid esters having C₂ to C₁₈ alkoxyalkyl groups, and particularly preferred are n-butyl acrylate and methoxyethyl acrylate to provide a cross-linked rubber having further enhanced cold resistance. These α,β-ethylenically unsaturated monocarboxylic acid ester monomers may be used alone or in combination.

The proportion of the α,β-ethylenically unsaturated monocarboxylic acid ester monomer unit contained in the nitrile group-containing copolymer rubber according to the present invention is preferably 1 to 50 wt%, more preferably 10 to 40 wt%, still more preferably 20 to 35 wt% of the total monomer units. By controlling the proportion of the α,β-ethylenically unsaturated monocarboxylic acid ester monomer unit within this range, a cross-linked rubber having favorable oil resistance and further enhanced cold resistance can be obtained. In addition, a reduction in polymerization conversion ratio and a reduction in strength as one of the mechanical properties of the resulting cross-linked rubber caused by an excessively large content of the α,β-ethylenically unsaturated monocarboxylic acid ester monomer unit can be prevented.

It is preferred that the nitrile group-containing copolymer rubber according to the present invention also contains a conjugated diene monomer unit to provide a cross-linked product having rubber elasticity.

Preferred conjugated diene monomers forming the conjugated diene monomer unit are C₄ to C₆ conjugated diene monomers such as 1,3-butadiene, isoprene, 2,3-dimethyl-1,3-butadiene, 1,3-pentadiene, and chloroprene. 1,3-Butadiene and isoprene are more preferred, and 1,3-butadiene is particularly preferred. These conjugated diene monomers may be used alone or in combination.

The content of the conjugated diene monomer unit (including hydrogenated moieties) is preferably 10 to 88 wt%, more preferably 30 to 60 wt%, still more preferably 40 to 50 wt% of the total monomer units. A content of the conjugated diene monomer unit within this range results in a cross-linked rubber maintaining favorable heat resistance and chemical stability and having excellent rubber elasticity. In addition, a content of the conjugated diene monomer unit controlled to the lower limit value or higher can improve the polymerization conversion ratio.

In addition to the α,β-ethylenically unsaturated nitrile monomer unit, the fumaric acid monoester monomer unit, the α,β-ethylenically unsaturated monocarboxylic acid ester monomer unit, and optionally the conjugated diene monomer unit, the nitrile group-containing copolymer rubber according to the present invention may contain a unit of an additional monomer copolymerizable with the monomers which form these monomer units. Examples of such an additional monomer include α,β-ethylenically unsaturated monocarboxylic acid monomers, α,β-ethylenically unsaturated dicarboxylic acid monoester monomers (excluding those categorized under the fumaric acid monoester monomer), α,β-ethylenically unsaturated polyvalent carboxylic acid monomers, ethylene, α-olefin monomers, aromatic vinyl monomers, fluorine-containing vinyl monomers, copolymerizable antioxidants, and the like.

Examples of the α,β-ethylenically unsaturated monocarboxylic acid monomers include acrylic acid, methacrylic acid, ethylacrylic acid, crotonic acid, cinnamic acid, and the like.

Examples of the α,β-ethylenically unsaturated dicarboxylic acid monoester monomer (excluding those categorized under the fumaric acid monoester monomer) include maleic acid monoalkyl esters such as monomethyl maleate, monoethyl maleate, monopropyl maleate, and mono-n-butyl maleate; maleic acid monocycloalkyl esters such as monocyclopentyl maleate, monocyclohexyl maleate, and monocycloheptyl maleate; maleic acid monoalkylcycloalkyl esters such as monomethylcyclopentyl maleate and monoethylcyclohexyl maleate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkylcycloalkyl esters such as monomethylcyclopentyl citraconate and monoethylcyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; itaconic acid monoalkylcycloalkyl esters such as monomethylcyclopentyl itaconate and monoethylcyclohexyl itaconate; and the like.

Examples of the α,β-ethylenically unsaturated polyvalent carboxylic acid monomers include butenedioic acids such as fumaric acid and maleic acid, itaconic acid, citraconic acid, mesaconic acid, glutaconic acid, allylmalonic acid, teraconic acid, and the like.

Preferred α-olefin monomers are those having 3 to 12 carbon atoms. Examples thereof include propylene, 1-butene, 4-methyl-1-pentene, 1-hexene, 1-octene, and the like.

Examples of the aromatic vinyl monomers include styrene, α-methylstyrene, vinylpyridine, and the like.

Examples of the fluorine-containing vinyl monomers include fluoroethyl vinyl ether, fluoropropyl vinyl ether, o-trifluoromethylstyrene, pentafluorovinyl benzoate, difluoroethylene, tetrafluoroethylene, and the like.

Examples of the copolymerizable antioxidants include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, and the like.

These additional copolymerizable monomers may be used in combination. The content of the unit of the additional monomer is preferably 50 wt% or less, more preferably 40 wt% or less, still more preferably 10 wt% or less of the total monomer units which form the nitrile group-containing copolymer rubber. In order to reduce the content of acid anhydride groups in the nitrile group-containing copolymer rubber, the total content of α,β-ethylenically unsaturated dicarboxylic acid monoester monomer unit excluding the fumaric acid monoester monomer unit and α,β-ethylenically unsaturated polyvalent carboxylic acid monomer unit is preferably 5 wt% or less, more preferably 2 wt% or less relative to the total monomer units which form the nitrile group-containing copolymer rubber. Particularly preferably, these monomer units are substantially not contained.

The nitrile group-containing copolymer rubber according to the present invention has an iodine value of 120 or less, preferably 60 or less, more preferably 50 or less, particularly preferably 30 or less. An excessively high iodine value of the nitrile group-containing copolymer rubber may result in a cross-linked rubber having reduced heat resistance and reduced ozone resistance.

The carboxyl group content of the nitrile group-containing copolymer rubber according to the present invention is preferably 6 × 10⁻² to 1 × 10⁻¹ ephr, more preferably 1 × 10⁻² to 6 × 10⁻² ephr, particularly preferably 2 × 10⁻² to 4 × 10⁻² ephr per 100 g of nitrile group-containing copolymer rubber. A carboxyl group content of the nitrile group-containing copolymer rubber controlled to the lower limit or higher results in a cross-linked rubber having improved mechanical strength, and a carboxyl group content controlled to the upper limit or lower results in improved cold resistance.

The nitrile group-containing copolymer rubber according to the present invention has a polymer Mooney viscosity (ML₁₊₄, 100°C) of preferably 10 to 200, more preferably 15 to 100, still more preferably 20 to 80, particularly preferably 30 to 60. A polymer Mooney viscosity within this range results in favorable processability, as well as a cross-linked rubber having appropriately enhanced mechanical properties.

Although the nitrile group-containing copolymer rubber according to the present invention can be produced by any method, the nitrile group-containing copolymer rubber can be produced by copolymerizing the monomers described above, and hydrogenating the carbon-carbon double bonds of the resulting copolymer. Any polymerization method can be used without limitation, and a known emulsion polymerization or solution polymerization method may be used. Preferred is emulsion polymerization from the viewpoint of industrial productivity. In emulsion polymerization, polymerization additives usually used can be used in addition to an emulsifier, a polymerization initiator, and a molecular weight adjuster.

Any emulsifier can be used without limitation. Examples thereof include nonionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as salts of fatty acids such as myristic acid, palmitic acid, oleic acid, and linolenic acid, salts of alkylbenzene sulfonates such as sodium dodecylbenzenesulfonate, polycondensates of naphthalene sulfonate salts with formalin, higher alcohol sulfuric acid ester salts, and alkyl sulfosuccinic acid salts; copolymerizable emulsifiers such as sulfo esters of α,β-unsaturated carboxylic acids, sulfate esters of α,β-unsaturated carboxylic acids, and sulfoalkylaryl ethers; and the like. The amount of the emulsifier to be added is preferably 0.1 to 10 parts by weight, more preferably 0.5 to 5 parts by weight relative to 100 parts by weight of the monomers used in polymerization.

Any radical initiator can be used as the polymerization initiator without limitation. Examples thereof include inorganic peroxides such as potassium persulfate, sodium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, and t-butylperoxy isobutyrate; azo compounds such as azobisisobutyronitrile, azobis-2,4-dimethylvaleronitrile, azobiscyclohexanecarbonitrile, and methyl azobisisobutyrate; and the like. These polymerization initiators can be used alone or in combination. Preferred polymerization initiators are inorganic or organic peroxides. If a peroxide is used as the polymerization initiator, a combination thereof with a reducing agent such as sodium bisulfite, ferrous sulfate, sodium formaldehyde sulfoxylate, or iron sodium ethylenediaminetetraacetate can be used as a redox polymerization initiator. Furthermore, a chelating agent such as ethylenediaminetetraacetic acid ferric sodium salt tetrahydrate, and a builder such as sodium carbonate or sodium sulfate can also be used. The amount of the polymerization initiator to be added is preferably 0.01 to 2 parts by weight relative to 100 parts by weight of the monomers used in polymerization.

Any molecular weight adjuster can be used without limitation. Examples thereof include mercaptans such as t-dodecyl mercaptan, n-dodecyl mercaptan, and octyl mercaptan; halogenated hydrocarbons such as carbon tetrachloride, methylene chloride, and methylene bromide; α-methylstyrene dimers; sulfur-containing compounds such as tetraethylthiuram disulfide, dipentamethylenethiuram disulfide, and diisopropyl xanthogen disulfide; and the like. These molecular weight adjusters can be used alone or in combination. Among these, preferred are mercaptans, and more preferred is t-dodecyl mercaptan. The amount of the molecular weight adjuster to be used is preferably 0.1 to 0.8 parts by weight relative to 100 parts by weight of the total monomers.

Water is usually used as the medium for emulsion polymerization. The amount of water is preferably 80 to 500 parts by weight, more preferably 80 to 300 parts by weight relative to 100 parts by weight of the monomers used in polymerization.

In emulsion polymerization, polymerization additives such as a stabilizer, a dispersant, a pH adjuster, an oxygen absorbing agent, and a particle size adjuster can be used as needed. The additives of any type can be used in any amount.

In the present invention, the resulting copolymer may be subjected to hydrogenation (hydrogenating reaction) as needed. Hydrogenation may be performed by a known method. Examples thereof include an oil layer hydrogenation method of coagulating a latex of a copolymer prepared through emulsion polymerization, and hydrogenating the latex in an oil layer; an aqueous layer hydrogenation method of hydrogenating a latex of the resulting copolymer as it is; and the like.

If hydrogenation is performed by the oil layer hydrogenation method, suitably, the latex of the above copolymer prepared by emulsion polymerization is subjected to coagulation by salting-out or with an alcohol, filtration, and drying, and then is dissolved in an organic solvent. In the next step, a hydrogenating reaction (oil layer hydrogenation) is performed, and the resulting hydride is added into a large amount of water, and is subjected to coagulation, washing with water, filtration, and drying. Thereby, the nitrile group-containing copolymer rubber according to the present invention can be prepared. In some cases, centrifugal dehydration may be performed.

The latex can be coagulated by salting-out using a known coagulant such as sodium chloride, calcium chloride, aluminum sulfate, magnesium sulfate, or the like. The coagulation may be performed using an alcohol such as methanol or isopropyl alcohol, instead of coagulation by salting-out. The solvent to be used in the oil layer hydrogenation method can be any liquid organic compound which dissolves a copolymer prepared through emulsion polymerization. Benzene, chlorobenzene, toluene, xylene, hexane, cyclohexane, tetrahydrofuran, methyl ethyl ketone, ethyl acetate, cyclohexanone, acetone, and the like are preferably used.

The catalyst to be used in the oil layer hydrogenation method can be any known selective hydrogenation catalyst. Preferred are palladium catalysts and rhodium catalysts, and more preferred are palladium catalysts (such as palladium acetate, palladium chloride, palladium hydroxide, and the like). These may be used in combination. In such a case, a palladium catalyst is preferably used as a main active component. These catalysts are usually used as carried on carriers. Examples of the carriers include silica, silica-alumina, alumina, diatomite, activated carbon, and the like. The amount of the catalyst to be used is preferably 10 to 20000 ppm by weight, more preferably 50 to 15000 ppm by weight relative to the copolymer.

Alternatively, if hydrogenation is performed by the aqueous layer hydrogenation method, suitably, a latex of the copolymer prepared through emulsion polymerization is diluted with water added, as needed, and is subjected to the hydrogenating reaction. Examples of the aqueous layer hydrogenation method include an aqueous layer direct hydrogenation method of performing hydrogenation through feeding of hydrogen to a reaction system in the presence of a hydrogenation catalyst, and an aqueous layer indirect hydrogenation method of performing hydrogenation through reduction in the presence of an oxidizing agent, a reducing agent, and an activating agent. Among these, preferred is an aqueous layer direct hydrogenation.

In the aqueous layer direct hydrogenation method, the content of the copolymer in the aqueous layer (content in the form of a latex) is preferably 40 wt% or less to prevent aggregation. The hydrogenation catalyst can be any compound which hardly decomposes in water. Specific examples thereof include palladium catalysts such as palladium salts of carboxylic acids such as formic acid, propionic acid, lauric acid, succinic acid, oleic acid, and phthalic acid; chlorinated palladium compounds such as palladium chloride, dichloro(cyclooctadiene)palladium, dichloro(norbonadiene)palladium, and ammonium hexachloropalladate(IV); iodides such as palladium iodide; palladium nitrate; palladium sulfate dihydrate; and the like. Among these, particularly preferred are palladium salts of carboxylic acids, palladium chloride, and palladium nitrate. The amount of the hydrogenation catalyst to be used may be appropriately determined. The amount is preferably 5 to 20000 ppm by weight, more preferably 10 to 15000 ppm by weight relative to the copolymer prepared through polymerization.

In the aqueous layer direct hydrogenation method, the hydrogenation catalyst in the latex is removed after the hydrogenating reaction is completed. This removal operation can be performed, for example, using a method comprising a step of adding an adsorbent such as an activated carbon or an ion exchange resin and adsorbing the hydrogenation catalyst under stirring or a step of forming a complex of the hydrogenation catalyst with a complexing agent in the presence of an oxidizing agent or a reducing agent, and then centrifuging and/or filtering the latex. The hydrogenation catalyst can be left in the latex, rather than removed.

In the aqueous layer direct hydrogenation method, the nitrile group-containing copolymer rubber according to the present invention can be produced by performing coagulation with an alcohol such as methanol and isopropyl alcohol or by salting-out, washing with water, filtration, and drying on the resulting latex after the hydrogenating reaction. In this case, the steps of washing with water, filtration, and drying following coagulation can be performed by conventionally known methods. Coagulation by salting-out can be performed using a known coagulant such as sodium chloride, calcium chloride, aluminum sulfate, or magnesium sulfate. Centrifugal dehydration may be performed in some cases.

An antioxidant can also be added to the oil layer or the aqueous layer before coagulation. Any antioxidant can be used without limitation. Examples of usable antioxidants include 2,6-di-t-butyl-4-cresol (ANTAGE BHT, made by Kawaguchi Chemical Industry Co., LTD.), 2,2'-methylenebis(4-methyl-6-tert-butylphenol) (Sandant 2246, made by Sanshin Chemical Industry Co., Ltd. industry), bis(3,5-di-tert-butyl-4-hydroxybenzyl)sulfide (Sandant 103, made by Sanshin Chemical Industry Co., Ltd.), pentaerythritol tetrakis[3-(3,5-di-tert-butyl-4-hydroxyphenyl)propionate] (Irganox 1010, made by BASF SE Japan Ltd.), octadecyl 3-(3,5-di-tert-butyl-4-hydroxyphenyl)propionate (Irganox 1076, made by BASF SE Japan Ltd.), isooctyl-3-(3,5-di-tert-butyl-4-hydroxyphenyl)propionate (Irganox 1135, made by BASF SE Japan Ltd.), hexamethylenebis[3-(3,5-di-tert-butyl-4-hydroxyphenyl)propionate] (Irganox 259, made by BASF SE Japan Ltd.), 4,6-bis(octylthiomethyl)-o-cresol (Irganox 1520L, made by BASF SE Japan Ltd.), and the like.

### Cross-linkable rubber composition

The cross-linkable rubber composition according to the present invention comprises the nitrile group-containing copolymer rubber according to the present invention and a polyamine cross-linking agent.

The polyamine cross-linking agent may be any compound having two or more amino groups or any compound which is converted into a form having two or more amino groups during cross-linking. Preferred are compounds having an aliphatic hydrocarbon or aromatic hydrocarbon moiety with amino groups or hydrazide structures (the structures represented by -CONHNH₂ where CO represents a carbonyl group) replacing a plurality of hydrogen atoms and compounds which are converted into such a form during cross-linking.

Specific examples of the polyamine cross-linking agent include aliphatic polyvalent amines such as hexamethylenediamine, hexamethylenediamine carbamate, N,N-dicinnamylidene-1,6-hexanediamine, tetramethylenepentamine, and hexamethylenediamine cinnamaldehyde adducts; aromatic polyvalent amines such as 4,4-methylenedianiline, m-phenylenediamine, 4,4-diaminodiphenyl ether, 3,4-diaminodiphenyl ether, 4,4-(m-phenylenediisopropylidene)dianiline, 4,4-(p-phenylenediisopropylidene)dianiline, 2,2-bis[4-(4-aminophenoxy)phenyl]propane, 4,4-diaminobenzanilide, 4,4-bis(4-aminophenoxy)biphenyl, m-xylylenediamine, p-xylylenediamine, and 1,3,5-benzenetriamine; polyvalent hydrazides such as isophthalic acid dihydrazide, terephthalic acid dihydrazide, phthalic acid dihydrazide, 2,6-naphthalene dicarboxylic acid dihydrazide, naphthalenic acid dihydrazide, oxalic acid dihydrazide, malonic acid dihydrazide, succinic acid dihydrazide, glutamic acid dihydrazide, adipic acid dihydrazide, pimelic acid dihydrazide, suberic acid dihydrazide, azelaic acid dihydrazide, sebacic acid dihydrazide, brassylic acid dihydrazide, dodecanedioic acid dihydrazide, acetone dicarboxylic acid dihydrazide, fumaric acid dihydrazide, maleic acid dihydrazide, itaconic acid dihydrazide, trimellitic acid dihydrazide, 1,3,5-benzene tricarboxylic acid dihydrazide, aconitic acid dihydrazide, and pyromellitic acid dihydrazide; and the like. Among these, preferred are aliphatic polyvalent amines and aromatic polyvalent amines, more preferred are hexamethylenediamine carbamate and 2,2-bis[4-(4-aminophenoxy)phenyl]propane, and particularly preferred is hexamethylenediamine carbamate to more significantly enhance the effects of the present invention.

Although the cross-linkable rubber composition according to the present invention can contain the polyamine cross-linking agent in any amount, the content is preferably 0.1 to 20 parts by weight, more preferably 1 to 15 parts by weight relative to 100 parts by weight of the nitrile group-containing copolymer rubber.

Preferably, the cross-linkable rubber composition according to the present invention further contains a basic cross-linking accelerator in addition to the polyamine cross-linking agent.

Specific examples of the basic cross-linking accelerator include compounds represented by General Formula (1), basic cross-linking accelerators having a cyclic amidine structure, basic guanidine cross-linking accelerators, basic aldehyde amine cross-linking accelerators, and the like.
[Chem 1]

R¹-NH-R² (1)

(where R¹ and R² each independently represent a C₁ to C₁₂ alkyl group optionally having a substituent or a C₅ to C₁₂ cycloalkyl group optionally having a substituent).

R¹ and R² are a C₁ to C₁₂ alkyl group optionally having a substituent or a C₅ to C₁₂ cycloalkyl group optionally having a substituent. Preferred is a C₅ to C₁₂ cycloalkyl group optionally having a substituent, and particularly preferred is a C₅ to C₈ cycloalkyl group optionally having a substituent.

It is also preferred that R¹ and R² have no substituent.

When R¹ and R² have a substituent, specific examples of the substituent include a hydroxyl group, an alkoxy group, an alkoxycarbonyl group, an amino group, halogen atoms, and the like.

Among these compounds represented by General Formula (1), more preferred are compounds represented by General Formula (2) to further enhance the processability and the scorching stability.
[Chem 2]

R³-NH-R⁴ (2)

(where R³ and R⁴ each independently represent a C₅ to C₈ cycloalkyl group optionally having a substituent).

Although R³ and R⁴ are a C₅ to C₈ cycloalkyl group optionally having a substituent, preferred are C₅ or C₆ cycloalkyl groups optionally having a substituent, and more preferred are C₆ cycloalkyl groups optionally having a substituent.

It is also preferred that R³ and R⁴ have no substituent.

When R³ and R⁴ have a substituent, specific examples of the substituent include a hydroxyl group, an alkoxy group, an alkoxycarbonyl group, an amino group, halogen atoms, and the like.

Specific examples of the compounds represented by General Formula (1) include dicycloalkylamines such as dicyclopentylamine, dicyclohexylamine, and dicycloheptylamine; secondary amines whose nitrogen atom is bonded to an alkyl group and a cycloalkyl group, such as N-methylcyclopentylamine, N-butylcyclopentylamine, N-heptylcyclopentylamine, N-octylcyclopentylamine, N-ethylcyclohexylamine, N-butylcyclohexylamine, N-heptylcyclohexylamine, and N-octylcyclooctylamine; secondary amines whose nitrogen atom is bonded to an alkyl group having a hydroxy group and a cycloalkyl group, such as N-hydroxymethylcyclopentylamine and N-hydroxybutylcyclohexylamine; secondary amines whose nitrogen atom is bonded to an alkyl group having an alkoxy group and a cycloalkyl group, such as N-methoxyethylcyclopentylamine and N-ethoxybutylcyclohexylamine; secondary amines whose nitrogen atom is bonded to an alkyl group having an alkoxycarbonyl group and a cycloalkyl group, such as N-methoxycarbonylbutylcyclopentylamine and N-methoxycarbonylheptylcyclohexylamine; secondary amines whose nitrogen atom is bonded to an alkyl group having an amino group and a cycloalkyl group, such as N-aminopropylcyclopentylamine and N-aminoheptylcyclohexylamine; secondary amines whose nitrogen atom is bonded to cycloalkyl groups having a halogen atom, such as di(2-chlorocyclopentyl)amine and di(3-chlorocyclopentyl)amine; and the like. To further enhance the processability and the scorching stability, preferred are dicycloalkylamines, more preferred are dicyclopentylamine and dicyclohexylamine, and particularly preferred is dicyclohexylamine.

Examples of the basic cross-linking accelerators having a cyclic amidine structure include 1,8-diazabicyclo[5,4,0]undecene-7 (hereinafter, abbreviated to "DBU" in some cases), 1,5-diazabicyclo[4,3,0]nonene-5 (hereinafter, abbreviated to "DBN" in some cases), 1-methylimidazole, 1-ethylimidazole, 1-phenylimidazole, 1-benzylimidazole, 1,2-dimethylimidazole, 1-ethyl-2-methylimidazole, 1-methoxyethylimidazole, 1-phenyl-2-methylimidazole, 1-benzyl-2-methylimidazole, 1-methyl-2-phenylimidazole, 1-methyl-2-benzylimidazole, 1,4-dimethylimidazole, 1,5-dimethylimidazole, 1,2,4-trimethylimidazole, 1,4-dimethyl-2-ethylimidazole, 1-methyl-2-methoxyimidazole, 1-methyl-2-ethoxyimidazole, 1-methyl-4-methoxyimidazole, 1-methyl-2-methoxyimidazole, 1-ethoxymethyl-2-methylimidazole, 1-methyl-4-nitroimidazole, 1,2-dimethyl-5-nitroimidazole, 1,2-dimethyl-5-aminoimidazole, 1-methyl-4-(2-aminoethyl)imidazole, 1-methylbenzimidazole, 1-methyl-2-benzylbenzimidazole, 1-methyl-5-nitrobenzimidazole, 1-methylimidazoline, 1,2-dimethylimidazoline, 1,2,4-trimethylimidazoline, 1,4-dimethyl-2-ethylimidazoline, 1-methyl-phenylimidazoline, 1-methyl-2-benzylimidazoline, 1-methyl-2-ethoxyimidazoline, 1-methyl-2-heptylimidazoline, 1-methyl-2-undecylimidazoline, 1-methyl-2-heptadecylimidazoline, 1-methyl-2-ethoxymethylimidazoline, 1-ethoxymethyl-2-methylimidazoline, and the like. Among these basic cross-linking accelerators having a cyclic amidine structure, preferred are 1,8-diazabicyclo[5,4,0]undecene-7 and 1,5-diazabicyclo[4,3,0]nonene-5, and more preferred is 1,8-diazabicyclo[5,4,0]undecene-7.

Examples of the guanidine basic cross-linking accelerators include tetramethylguanidine, tetraethyguanidine, diphenylguanidine, 1,3-di-ortho-tolylguanidine, orthotolylbiguanide, and the like.

Examples of the aldehyde amine basic cross-linking accelerators include n-butylaldehyde aniline, acetaldehyde ammonia, and the like.

Among these basic cross-linking accelerators, preferred are the compounds represented by General Formula (1), the basic guanidine cross-linking accelerators, and the basic cross-linking accelerators having a cyclic amidine structure, and more preferred are the compounds represented by General Formula (1) and the basic cross-linking accelerators having a cyclic amidine structure.

The compounds represented by General Formula (1) may be mixed with alcohols such as an alkylene glycol and a C₅ to C₂₀ alkyl alcohol, and such mixtures may further contain an inorganic acid and/or an organic acid. The compounds represented by General Formula (1) may form (a) salt(s) with the inorganic acid and/or the organic acid, and may further form a composite with the alkylene glycol. The basic cross-linking accelerator having a cyclic amidine structure may form a salt with an organic carboxylic acid, an alkyl phosphoric acid, or the like.

If the basic cross-linking accelerator is compounded, the compounding amount of the basic cross-linking accelerator in the cross-linkable rubber composition according to the present invention is preferably 0.1 to 20 parts by weight, more preferably 0.2 to 15 parts by weight, still more preferably 0.5 to 10 parts by weight relative to 100 parts by weight of the nitrile group-containing copolymer rubber.

Besides the above components, the following compounding agents usually used in the rubber field can also be compounded with the cross-linkable rubber composition according to the present invention: for example, reinforcing agents such as carbon black and silica, fillers such as calcium carbonate, talc, and clay, metal oxides such as zinc oxide and magnesium oxide, α,β-ethylenically unsaturated carboxylic acid metal salts such as zinc methacrylate and zinc acrylate, co-cross-linking agents, cross-linking aids, cross-linking retarders, antiaging agents, antioxidants, light stabilizers, scorching preventing agents such as primary amines, activating agents such as diethylene glycol, coupling agents, plasticizers, processing aids, greases, adhesives, lubricants, flame retardants, antifungal agents, acid acceptors, antistatic agents, pigments, foaming agents, and the like. These compounding agents can be compounded in any compounding amounts according to the purpose of compounding within the ranges not impairing the object and effects of the present invention.

Examples of the coupling agents include silane coupling agents, aluminum coupling agents, titanate coupling agents, and the like. Any silane coupling agent can be used without limitation. Specific examples thereof include sulfur-containing silane coupling agents such as γ-mercaptopropyltrimethoxysilane, γ-mercaptomethyltrimethoxysilane, γ-mercaptomethyltriethoxysilane, γ-mercaptohexamethyldisilazane, bis(3-triethoxysilylpropyl)tetrasulfane, and bis(3-triethoxysilylpropyl)dusulfane; epoxy group-containing silane coupling agents such as γ-glycidoxypropyltrimethoxysilane, γ-glycidoxypropylmethyldimethoxysilane, β-(3,4-epoxycyclohexyl)ethyltrimethoxysilane, γ-mercaptopropyltrimethoxysilane, and γ-glycidoxypropylmethyldiethoxysilane; amino group-containing silane coupling agents such as N-(β-aminoethyl)-γ-aminopropyltrimethoxysilane, γ-aminopropyltrimethoxysilane, γ-aminopropyltriethoxysilane, N-2-(aminoethyl)-3-aminopropyltrimethoxysilane, N-2-(aminoethyl)-3-aminopropyltriethoxysilane, 3-triethoxysilyl-N-(1,3-dimethylbutylidene)propylamine, and N-phenyl-3-aminopropyltrimethoxysilane; (meth)acryloxy group-containing silane coupling agents such as γ-methacryloxypropyltrimethoxysilane, γ-methacryloxypropyltris(β-methoxyethoxy)silane, γ-methacryloxypropylmethyldimethoxysilane, γ-methacryloxypropylmethyldiethoxysilane, γ-methacryloxypropyltriethoxysilane, and γ-acryloxypropyltrimethoxysilane; vinyl group-containing silane coupling agents such as vinyltrimethoxysilane, vinyltriethoxysilane, vinyltris(β-methoxyethoxy)silane, vinyltrichlorosilane, and vinyltriacetoxysilane; chloropropyl group-containing silane coupling agents such as 3-chloropropyltrimethoxysilane; isocyanate group-containing silane coupling agents such as 3-isocyanatepropyltriethoxysilane; styryl group-containing silane coupling agents such as p-styryltrimethoxysilane; ureido group-containing silane coupling agents such as 3-ureidopropyltriethoxysilane; allyl group-containing silane coupling agents such as diallyldimethylsilane; alkoxy group-containing silane coupling agents such as tetraethoxysilane; phenyl group-containing silane coupling agents such as diphenyldimethoxysilane; fluoro group-containing silane coupling agents such as trifluoropropyltrimethoxysilane; alkyl group-containing silane coupling agents such as isobutyltrimethoxysilane and cyclohexylmethyldimethoxysilane; and the like.

Any aluminum coupling agent can be used without limitation. Specific examples thereof include acetoalkoxyaluminum diisopropylate, and the like.

Any titanate coupling agent can be used without limitation. Specific examples thereof include isopropyltriisostearoyl titanate, isopropyltris(dioctylpyrophosphate) titanate, isopropyltri(N-aminoethyl-aminoethyl) titanate, tetraoctylbis(ditridecylphosphite) titanate, tetra(2,2-diallyloxymethyl-1-butyl)bis(ditridecyl)phosphite titanate, bis(dioctylpyrophosphate)oxyacetate titanate, bis(dioctylpyrophosphate)ethylene titanate, tetraisopropylbis(dioctylphosphite) titanate, isopropyltriisostearoyl titanate, and the like. These silane coupling agents, aluminum coupling agents, titanate coupling agents, and the like can be used alone or in combination.

Examples of carbon black include furnace black, acetylene black, thermal black, channel black, austin black, graphite, and the like. These can be used alone or in combination.

Examples of silica include natural silicas such as quartz powder and silica stone powder; synthetic silicas such as silicic anhydride (such as silica gel and aerosil) and hydrous silicic acid; and the like. Among these, preferred are synthetic silicas. These silicas may be surface-treated with a coupling agent or the like. Examples of coupling agents usable in the surface treatment include those listed above.

Any co-cross-linking agent can be used without limitation. Preferred are low molecular weight or high molecular weight compounds having two or more radically reactive unsaturated groups in the molecule. Examples thereof include polyfunctional vinyl compounds such as divinylbenzene and divinylnaphthalene; isocyanurates such as triallyl isocyanurate and trimethallyl isocyanurate; cyanurates such as triallyl cyanurate; maleimides such as N,N'-m-phenylenedimaleimide; allyl esters of polyvalent acids such as diallyl phthalate, diallyl isophthalate, diallyl maleate, diallyl fumarate, diallyl sebacate, and triallyl phosphate; diethylene glycol bisallyl carbonate; allyl ethers such as ethylene glycol diallyl ether, triallyl ether of trimethylolpropane, and partial allyl ether of pentaerythrite; allyl-modified resins such as allylated novolak and allylated resol resin; tri- to pentafunctional methacrylate compounds and acrylate compounds such as trimethylolpropane trimethacrylate and trimethylolpropane triacrylate; and the like. These can be used alone or in combination.

Any plasticizer can be used without limitation, for example, trimellitic acid plasticizers, pyromellitic acid plasticizers, ether ester plasticizers, polyester plasticizers, phthalic acid plasticizers, adipic acid ester plasticizers, phosphoric acid ester plasticizers, sebacic acid ester plasticizers, alkylsulfonic acid ester compound plasticizers, epoxidated vegetable oil plasticizers, and the like can be used. Specific examples thereof include tri-2-ethylhexyl trimellitate, trimellitic acid isononyl ester, trimellitic acid mixed linear alkyl esters, dipentaerythritol esters, pyromellitic acid 2-ethylhexyl ester, polyether esters (molecular weight: about 300 to 5000), bis[2-(2-butoxyethoxy)ethyl] adipate, dioctyl adipate, adipic acid polyester (molecular weight: about 300 to 5000), dioctyl phthalate, diisononyl phthalate, dibutyl phthalate, tricresyl phosphate, dibutyl sebacate, alkylsulfonic acid phenyl ester, epoxidized soybean oil, diheptanoate, di-2-ethylhexanoate, didecanoate, and the like. These can be used alone or in combination.

Furthermore, in the cross-linkable rubber composition according to the present invention, a rubber other than the nitrile group-containing copolymer rubber according to the present invention described above may be compounded in the range not impairing the effects of the present invention.

Examples of such a rubber include acrylic rubber, ethylene-acrylic acid copolymer rubber, styrene-butadiene copolymer rubber, polybutadiene rubber, ethylene-propylene copolymer rubber, ethylene-propylene-diene ternary copolymer rubber, epichlorohydrin rubber, fluorocarbon rubber, urethane rubber, chloroprene rubber, silicone rubber, natural rubber, polyisoprene rubber, and the like.

If the rubber other than the nitrile group-containing copolymer rubber according to the present invention is compounded, the compounding amount in the cross-linkable rubber composition is preferably 30 parts by weight or less, more preferably 20 parts by weight or less, still more preferably 10 parts by weight or less relative to 100 parts by weight of the nitrile group-containing copolymer rubber according to the present invention.

The cross-linkable rubber composition according to the present invention is prepared by mixing the components above preferably in a nonaqueous system. The cross-linkable rubber composition according to the present invention can be prepared by any method without limitation. The cross-linkable rubber composition can be usually prepared as follows: The components other than the cross-linking agent and thermally unstable components are primarily kneaded with a mixer such as a Banbury mixer, an internal mixer, a kneader, or the like. The kneaded mixture is transferred into an open roll mill or the like. The cross-linking agent and the thermally unstable components are added thereto, and the mixture are secondarily kneaded. The primary kneading is performed usually at a temperature of 10 to 200°C, preferably 30 to 180°C for 1 minute to 1 hour, preferably 1 minute to 30 minutes. The secondary kneading is performed at a temperature of usually 10 to 90°C, preferably 20 to 60°C for 1 minute to 1 hour, preferably 1 minute to 30 minutes.

### Cross-linked rubber

The cross-linked rubber according to the present invention is prepared through cross-linking of the cross-linkable rubber composition according to the present invention described above.

The cross-linked rubber according to the present invention can be prepared as follows: The cross-linkable rubber composition according to the present invention is formed using a forming machine having a desired shape, such as an extruder, an injection molding machine, a compressor, or a roll, is subjected to a cross-linking reaction by heating, and is solidified into a cross-linked product. In this case, the composition may be cross-linked after forming, or may be formed and cross-linked at the same time. The forming temperature is usually 10 to 200°C, preferably 25 to 120°C. The cross-linking temperature is usually 100 to 200°C, preferably 130 to 190°C. The cross-linking time is usually 1 minute to 24 hours, preferably 2 minutes to 1 hour.

The cross-linked product, although cross-linked on its surface, may be insufficiently cross-linked in its inside depending on the shape, the size, and the like. Thus, the cross-linked rubber may be secondarily cross-linked by further heating.

The heating method may be appropriately selected from methods used to cross-link rubber, such as press heating, steam heating, oven heating, and hot air heating.

The cross-linked rubber according to the present invention thus obtained is prepared using the nitrile group-containing copolymer rubber according to the present invention described above, and has high compression set resistance.

For this reason, utilizing such properties, the cross-linked rubber according to the present invention can be used in broad applications: for example, a variety of sealing materials such as O-rings, packings, diaphragms, oil seals, shaft seals, bearing seals, wellhead seals, shock absorber seals, coolant seals as seals for sealing cooling solutions such as long life coolants (LLC), oil coolant seals, seals for pneumatic apparatuses and devices, seals for sealing Freon, fluorohydrocarbons, or carbon dioxide used in cooling apparatuses for air conditioners and compressors for refrigerators of air-conditioning systems, seals for sealing supercritical carbon dioxide or subcritical carbon dioxide used as washing media for precision cleaning, seals for roller devices (such as roller bearings, automotive hub units, automotive water pumps, linear guide devices, and ball screws), valves and valve sheets, blow out preventers (BOPs), and bladders; a variety of gaskets such as an intake manifold gasket attached to a connection between an intake manifold and a cylinder head, a cylinder head gasket attached to a connection between a cylinder block and a cylinder head, a rocker cover gasket attached to a connection between a rocker cover and a cylinder head, an oil pan gasket attached to a connection between an oil pan and a cylinder block or a transmission case, a gasket for fuel cell separators attached between a pair of housings which sandwich a unit cell including a positive electrode, an electrolyte plate, and a negative electrode, and a gasket for top covers for hard disk drives; a variety of rolls such as printing rolls, ironmaking rolls, papermaking rolls, industrial rolls, and office equipment rolls; a variety of belts such as flat belts (such as film core flat belts, cord flat belts, laminated flat belts, and single flat belts), V-belts (such as wrapped V-belts and low edge V-belts), V-ribbed belts (such as single V-ribbed belts, double V-ribbed belts, wrapped V-ribbed belt, rubber-backed V-ribbed belts, and top cog V-ribbed belts), CVT use belts, timing belts, toothed belts, and conveyor belts; a variety of hoses such as fuel hoses, turbo air hoses, oil hoses, radiator hoses, heater hoses, water hoses, vacuum brake hoses, control hoses, air conditioner hoses, brake hoses, power steering hoses, air hoses, marine hoses, risers, and flow lines; a variety of boots such as CVJ boots, propeller shaft boots, constant-velocity joint boots, and rack and pinion boots; damping material rubber parts such as cushion materials, dynamic dampers, rubber couplings, air springs, vibration insulators, and clutch facing materials; dust covers, automotive interior members, friction materials, tires, covered cables, shoe soles, electromagnetic wave shields, adhesives such as adhesives for flexible printed substrates, and fuel cell separators, as well as in the field of electronics.

### EXAMPLES

The present invention will now be described more specifically by way of Examples and Comparative Examples. In each example, the term "parts" is weight-based unless otherwise specified. Note that the tests and the evaluations were carried out as follows.

### Iodine value

The iodine value of the nitrile group-containing copolymer rubber was measured in accordance with JIS K 6235.

### Carboxyl group content

100 mL of pyridine was added to 0.2 g of a 2 mm-square nitrile group-containing copolymer rubber, and the mixture was stirred for 16 hours. Under stirring, titration was performed at room temperature using a 0.02 N alcoholic solution of potassium hydroxide and thymolphthalein as an indicator. The carboxyl group content (unit: ephr) was thereby determined as the number of moles of carboxyl groups relative to 100 g of rubber.

### Composition of nitrile group-containing copolymer rubber

The proportions of the monomer units forming the nitrile group-containing copolymer rubber were determined according to the following method.

In other words, the proportions of the mono-n-butyl fumarate unit, the monocyclohexyl fumarate unit, the mono-n-butyl maleate unit, and the mono-n-butyl itaconate unit were calculated as follows: The number of moles of carboxyl groups relative to 100 g of nitrile group-containing copolymer rubber after hydrogenation was determined by the method of measuring the "carboxyl group content" described above, and the determined number of moles thereof was converted into that of the mono-n-butyl fumarate unit, the monocyclohexyl fumarate unit, the mono-n-butyl maleate unit, or the mono-n-butyl itaconate unit.

The proportion of the 1,3-butadiene unit (including hydrogenated moieties) was calculated from the iodine value of the nitrile group-containing copolymer rubber before hydrogenation, which was measured (in accordance with JIS K 6235).

The proportion of the acrylonitrile unit was calculated from the nitrogen content in the nitrile group-containing copolymer rubber after hydrogenation, which was measured in accordance with JIS K 6384 by a semi-micro Kjeldahl method or a modified Dumas method.

The proportions of the n-butyl acrylate unit and the acrylic acid methoxyethyl acrylate unit were calculated as the balance of the monomer units above.

### Polymer Mooney viscosity

The Mooney viscosity (polymer Mooney viscosity) (ML₁₊₄, 100°C) of the nitrile group-containing copolymer rubber was measured in accordance with JIS K 6300.

### Change amount ΔML of Mooney viscosity

The Mooney viscosity (compound Mooney viscosity) (ML₁₊₄, 100°C) of the cross-linkable rubber composition was measured in accordance with JIS K 6300, and the difference from the polymer Mooney viscosity measured as described above was determined from the expression "(change amount ΔML of Mooney viscosity) = (compound Mooney viscosity) - (polymer Mooney viscosity)". The change amount ΔML of the Mooney viscosity was thereby calculated.

### Cold resistance test (TR test)

The cross-linkable rubber composition was placed in a mold of 15 cm in length, 15 cm in width, and 0.2 cm in depth, and was press-formed at 170°C for 20 minutes while being pressurized at a press pressure of 10 MPa, and thus a sheet-shaped cross-linked rubber was obtained. Then, the obtained cross-linked rubber was transferred to a gear oven, and was subjected to secondary cross-linking at 170°C for 4 hours to prepare a sheet-shaped cross-linked rubber. The cold resistance of the cross-linked rubber was measured by a TR test (low temperature elasticity recovery test) in accordance with JIS K 6261. Specifically, an extended cross-linked rubber was frozen, then the recovery ratio of the extended cross-linked rubber was measured by continuously increasing the temperature, and the temperature TR10 at which the length of the test piece was contracted (recovered) by 10% due to the temperature increase was measured. TR10 (unit: °C) is a measure of cold resistance. A smaller TR10 corresponds to higher cold resistance.

### Production Example 1 (Production of Nitrile group-containing copolymer rubber (n1))

180 parts of deionized water, 25 parts of a sodium dodecylbenzenesulfonate aqueous solution (concentration: 10%), 5 parts of a sodium naphthalenesulfonate formalin condensate (concentration: 10%), 15 parts of acrylonitrile, 39 parts of n-butyl acrylate, 5.5 parts of mono-n-butyl fumarate, and 0.75 parts of t-dodecyl mercaptan (molecular weight adjuster) were sequentially placed into a reactor. The gas inside the reactor was purged with nitrogen three times, and 40.5 parts of 1,3-butadiene was placed thereto. The reactor was kept at 10°C, and 0.1 parts of cumene hydroperoxide (polymerization initiator) and a reducing agent, a chelating agent, and a builder in appropriate amounts were placed thereinto. The polymerization reaction was continued under stirring. When the polymerization conversion ratio reached 80%, 4 parts of a 2.5 wt% aqueous solution of 2,2,6,6-tetramethylpiperidine-1-oxyl (polymerization terminator) was added to terminate the polymerization reaction. In the next step, residual monomers were removed at a water temperature of 60°C to yield a latex of Nitrile group-containing copolymer rubber (X1) (solids content: 25 wt%).

To palladium chloride, sodium chloride in a 2-fold molar equivalent to that of Pd metal in palladium chloride was added to prepare a palladium aqueous solution. Polyvinylpyrrolidone having a weight average molecular weight of 5,000 was then added to the resulting palladium aqueous solution in a 5-fold amount to that of the Pd metal in palladium chloride in terms of weight ratio, and a potassium hydroxide aqueous solution was further added to prepare a catalyst aqueous solution (pH = 12.0). The obtained latex of Nitrile rubber (X1) and the catalyst aqueous solution were added in an autoclave such that the palladium content relative to the dry weight of the rubber contained in the latex of Nitrile rubber (X1) was 2,500 ppm by weight. A hydrogenating reaction was performed for 6 hours under a hydrogen pressure of 3 MPa at a temperature of 50°C to prepare a latex of Nitrile group-containing copolymer rubber (n1). In the next step, the pH of the resulting latex was adjusted to 7.0. A mixed aqueous solution of dimethylglyoxime in a 5-fold molar amount of that of the Pd metal contained in palladium chloride used in the hydrogenating reaction and potassium hydroxide in a 2-fold molar amount of that of dimethylglyoxime was added, and a hydrogen peroxide solution in a 30-fold molar amount of that of the Pd metal was further added. After the mixed solution was heated to 80°C and was stirred for 5 hours, an insoluble complex was precipitated in the latex. The insoluble complex was removed through filtration. Further, 0.1 parts of 4,6-bis(octylthiomethyl)-o-cresol (Irganox 1520L, made by BASF SE Japan Ltd., antioxidant) and 0.3 parts of ACTICIDE MBS (made by Thor Japan Limited, preservative agent) were added relative to 100 parts of the polymer in the latex.

The resulting latex of Nitrile group-containing copolymer rubber (n1) was adjusted with 1 wt% sulfuric acid to have a pH of 4. Under stirring, the latex was coagulated by adding the latex to 3-fold volume of deionized water where 100 parts of dietary salt is added relative to 100 parts of the copolymer and the pH is adjusted to 3 with sulfuric acid. Then, the resulting crumbs were subjected to vacuum drying at 60°C for 12 hours to yield Nitrile group-containing copolymer rubber (n1).

The obtained Nitrile group-containing copolymer rubber (n1) had an iodine value of 11 and a polymer Mooney viscosity (ML₁₊₄, 100°C) of 45. The obtained Nitrile group-containing copolymer rubber (n1) also had the monomer composition and the carboxyl group content shown in Table 1.

### Production Examples 2 to 11 (production of Nitrile group-containing copolymer rubbers (n2) to (n11))

Nitrile group-containing copolymer rubbers (n2) to (n11) were prepared in the same manner as in Production Example 1 except that the types and compounding amounts of the monomers used in polymerization were varied as shown in Table 1 and the polymerization conversion ratio of the polymerization reaction and the amount of the palladium catalyst used in the hydrogenating reaction were varied as shown in Table 1. Nitrile group-containing copolymer rubbers (n2) to (n11) each had the iodine value, the polymer Mooney viscosity (ML₁₊₄, 100°C), the monomer composition, and the carboxyl group content shown in Table 1.

### [Table 1]

**Table 1**

| | | | Production Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Type of nitrile group-containing copolymer rubber | | | (n1) | (n2) | (n3) | (n4) | (n5) | (n6) | (n7) | (n8) | (n9) | (n10) | (n11) |
| Monomers used in polymerisation | | | | | | | | | | | | | |
| | Acrylonitrile | (parts) | 15 | 15 | 20 | 20 | 23 | 15 | 15 | 20 | 20 | 23 | 35 |
| | 1,3-Butadiene | (parts) | 40.5 | 40.5 | 39 | 39 | 38.5 | 40.5 | 40.5 | 39 | 39 | 38.5 | 59 |
| | Methoxyethyl acrylate | (parts) | | | | | 33 | | | | | 33 | |
| | n-Butyl acrylate | (parts) | 39 | 39 | 35.5 | 35.5 | | 39 | 39 | 35.5 | 35.5 | | |
| | Mono-n-butyl fumarate | (parts) | 5.5 | 5.5 | 5.5 | | 5.5 | | | | | | 6 |
| | Monocyclohexyl fumarate | (parts) | | | | 5.5 | | | | | | | |
| | Mono-n-butyl maleate | (parts) | | | | | | 5.5 | 5.5 | 5.5 | | 5.5 | |
| | Mono-n-butyl itaconate | (parts) | | | | | | | | | 5.5 | | |
| Polymerization conversion ratio | | (%) | 80 | 80 | 80 | 80 | 80 | 80 | 80 | 80 | 80 | 80 | 80 |
| Amount of palladium catalyst used in hydrogenation | | (ppm) | 2500 | 1000 | 2500 | 2500 | 2500 | 2500 | 1000 | 2500 | 2500 | 2500 | 2500 |

| Monomer composition of nitrile group-containing copolymer rubber | | | | | | | | | | | | | |
|---|---|---|---|---|---|---|---|---|---|---|---|---|---|
| | Acrylonitrile unit | (wt%) | 15 | 16 | 21 | 21 | 24 | 15 | 16 | 21 | 21 | 24 | 36 |
| | 1,3-Butadiene unit (including saturated moiety) | (wt%) | 46 | 45 | 43 | 43 | 47 | 46 | 45 | 43 | 43 | 47 | 58 |
| | Methoxyethyl acrylate unit | (wt%) | | | | | 24 | | | | | 24 | |
| | n-Butyl acrylate unit | (wt%) | 34 | 34 | 31 | 31 | | 34 | 34 | 31 | 31 | | |
| | Mono-n-butyl fumarate unit | (wt%) | 5 | 5 | 5 | | 5 | | | | | | 6 |
| | Monocyclohexyl fumarate unit | (wt%) | | | | 5 | | | | | | | |
| | Mono-n-butyl maleate unit | (wt%) | | | | | | 5 | 5 | 5 | | 5 | |
| | Mono-n-butyl itaconate unit | (wt%) | | | | | | | | | 5 | | |
| Iodine value of nitrile group-containing copolymer rubber | | | 11 | 60 | 11 | 11 | 8 | 11 | 60 | 11 | 11 | 8 | 9 |
| Polymer Mooney Viscosity (ML_{1+4,} 100°C) | | | 45 | 40 | 50 | 50 | 55 | 45 | 40 | 50 | 50 | 55 | 50 |
| Carboxyl group content | | (ephr) | 0.029 | 0.029 | 0.028 | 0.030 | 0.030 | 0.029 | 0.029 | 0.028 | 0.030 | 0.030 | 0.035 |

### Example 1

Using a Banbury mixer, 40 parts of FEF carbon (trade name "SEAST SO", made by Tokai Carbon Co., Ltd., carbon black), 5 parts of tri-2-ethylhexyl trimellitate (trade name "ADEKA CIZER C-8", made by ADEKA Corporation, plasticizer), 1 part of stearic acid, 1 part of a polyoxyethylene alkyl ether phosphoric acid ester (trade name "Phosphanol RL210", made by Toho Chemical Industry, Co., Ltd., processing aid), and 1.5 parts of 4,4'-di-(α,α'-dimethylbenzyl)diphenylamine (trade name "NOCRAC CD", made by Ouchi Shinko Chemical Industrial Co., Ltd., antioxidant) were added to and kneaded with 100 parts of Nitrile group-containing copolymer rubber (n1) prepared in Production Example 1. In the next step, the mixture was placed into a roll, and 4 parts of 1,8-diazabicyclo[5,4,0]undecene-7 (DBU) (trade name: "RHENOGRAN XLA-60 (GE2014)", made by Rhein Chemie Corporation, a product composed of 60 wt% of DBU (including a fraction which is zinc dialkyldiphosphate salt), and an acrylic acid polymer and a dispersant (40 wt% in total), basic cross-linking accelerator), and 2 parts of hexamethylenediamine carbamate (trade name "Diak#1", made by E. I. du Pont de Nemours and Company, polyamine cross-linking agent belonging to aliphatic polyvalent amines) were added to and kneaded with the mixture to prepare a cross-linkable rubber composition.

Using the resulting sheet-shaped cross-linkable rubber composition, the measurement of the change amount ΔML of Mooney viscosity and the cold resistance test (TR test) were performed by the methods described above. The results are shown in Table 2.

### Example 2 and Comparative Examples 1 and 2

Cross-linkable rubber compositions were prepared in the same manner as in Example 1 except that Nitrile group-containing copolymer rubbers (n2), (n6), and (n7) prepared in Production Examples 2, 6, and 7 were used instead of Nitrile group-containing copolymer rubber (n1) prepared in Production Example 1 and the compounding amount of hexamethylenediamine carbamate as the cross-linking agent was varied as shown in Table 2, and were evaluated in the same manner as in Example 1. The results are shown in Table 2.

**Table 2**

| | | | Example | | Comparative Exa mple | |
|---|---|---|---|---|---|---|
| | | | 1 | 2 | 1 | 2 |
| Type of nitrile group-containing copolymer rubber | | | (n1) | (n2) | (n6) | (n7) |
| Monomer composition of nitrile group-containing copolymer rubber | | | | | | |
| | Acrylonitrile unit | (wt%) | 15 | 16 | 15 | 16 |
| | 1,3-Butadiene unit (including saturated moiety) | (wt%) | 46 | 45 | 46 | 45 |
| | Methoxyethyl acrylate unit | (wt%) | | | | |
| | n-Butyl acrylate unit | (wt%) | 34 | 34 | 34 | 34 |
| | Mono-n-butyl fumarate unit | (wt%) | 5 | 5 | | |
| | Monocyclohexyl fumarate unit | (wt%) | | | | |
| | Mono-n-butyl maleate unit | (wt%) | | | 5 | 5 |
| | Mono-n-butyl itaconate unit | (wt%) | | | | |
| Iodine value of nitrile group-containing copolymer rubber | | | 11 | 60 | 11 | 60 |

| Formulation of cross-linkable rubber composition | | | | | | |
|---|---|---|---|---|---|---|
| | Compounding amount of hexamethylenediamine carbamate | (parts) | 2.0 | 2.0 | 2.0 | 2.0 |

| Evaluation of cross-linkable rubber composition | | | | | | |
|---|---|---|---|---|---|---|
| | Change amount of Mooney viscosity ΔML | | 12 | 14 | 17 | 19 |

| Evaluation of cross-linked rubber | | | | | | |
|---|---|---|---|---|---|---|
| | Cold resistance (TR10) | (° C) | -33 | -35 | -33 | -35 |

### Evaluation of Examples 1 and 2 and Comparative Examples 1 and 2

As shown in Table 2, a comparison between Examples 1 and 2 and Comparative Examples 1 and 2 which had a substantially same acrylonitrile unit content reveals the following facts.

Compared to the nitrile group-containing copolymer rubbers of Comparative Examples 1 and 2, which contained the mono-n-butyl maleate unit instead of the fumaric acid monoester monomer unit, the nitrile group-containing copolymer rubbers of Examples 1 and 2, which contained specific amounts of the α,β-ethylenically unsaturated nitrile monomer unit, the fumaric acid monoester monomer unit, and the α,β-ethylenically unsaturated monocarboxylic acid ester monomer unit and had an iodine value of 120 or less, showed a reduced change amount ΔML of the Mooney viscosity when the polyamine cross-linking agent was compounded to prepare the cross-linkable rubber compositions. Namely, these rubbers had excellent processability. Further, the cross-linked rubbers prepared from the nitrile group-containing copolymer rubbers of Examples 1 and 2 had excellent cold resistance.

### Examples 3 and 4 and Comparative Examples 3 and 4

Cross-linkable rubber compositions were prepared in the same manner as in Example 1 except that Nitrile group-containing copolymer rubbers (n3), (n4), (n8), and (n9) prepared in Production Examples 3, 4, 8, and 9 were used instead of Nitrile group-containing copolymer rubber (n1) prepared in Production Example 1 and the compounding amount of hexamethylenediamine carbamate as the cross-linking agent was varied as shown in Table 3, and were evaluated in the same manner as in Example 1. The results are shown in Table 3.

### [Table 3]

**Table 3**

| | | | Example | | Comparative Exa mple | |
|---|---|---|---|---|---|---|
| | | | 3 | 4 | 3 | 4 |
| Type of nitrile group-containing copolymer rubber | | | (n3) | (n4) | (n8) | (n9) |
| Monomer composition of nitrile group-containing copolymer rubber | | | | | | |
| | Acrylonitrile unit | (wt%) | 21 | 21 | 21 | 21 |
| | 1,3-Butadiene unit (including saturated moiety) | (wt%) | 43 | 43 | 43 | 43 |
| | Methoxyethyl acrylate unit | (wt%) | | | | |
| | n-Butyl acrylate unit | (wt%) | 31 | 31 | 31 | 31 |
| | Mono-n-butyl fumarate unit | (wt%) | 5 | | | |
| | Monocyclohexyl fumarate unit | (wt%) | | 5 | | |
| | Mono-n-butyl maleate unit | (wt%) | | | 5 | |
| | Mono-n-butyl itaconate unit | (wt%) | | | | 5 |
| Iodine value of nitrile group-containing copolymer rubber | | | 11 | 11 | 11 | 11 |

| Formulation of cross-linkable rubber composition | | | | | | |
|---|---|---|---|---|---|---|
| | Compounding amount of hexamethylenediamine carbamate | (parts) | 1.9 | 2.1 | 1.9 | 2.1 |

| Evaluation of cross-linkable rubber composition | | | | | | |
|---|---|---|---|---|---|---|
| | Change amount of Mooney viscosity Δ ML | | 17 | 18 | 22 | 24 |

| Evaluation of cross-linked rubber | | | | | | |
|---|---|---|---|---|---|---|
| | Cold resistance (TR10) | (° C) | -31 | -30 | -31 | -30 |

### Evaluation of Examples 3 and 4 and Comparative Examples 3 and 4

As shown in Table 3, a comparison between Examples 3 and 4 and Comparative Examples 3 and 4 which had the same acrylonitrile unit content reveals the following facts.

Compared to the nitrile group-containing copolymer rubbers of Comparative Examples 3 and 4, which contained the mono-n-butyl maleate unit instead of the fumaric acid monoester monomer unit, the nitrile group-containing copolymer rubbers of Examples 3 and 4, which contained specific amounts of the α,β-ethylenically unsaturated nitrile monomer unit, the fumaric acid monoester monomer unit, and the α,β-ethylenically unsaturated monocarboxylic acid ester monomer unit and had an iodine value of 120 or less, showed a reduced change amount ΔML of the Mooney viscosity when the polyamine cross-linking agent was compounded to prepare the cross-linkable rubber compositions. Namely, these rubbers had excellent processability. Further, the cross-linked rubbers prepared from the nitrile group-containing copolymer rubbers of Examples 3 and 4 had excellent cold resistance.

### Example 5 and Comparative Examples 5 and 6

Cross-linkable rubber compositions were prepared and evaluated in the same manner as in Example 1 except that the nitrile group-containing copolymer rubbers (n5), (n10), and (n11) were used instead of the nitrile group-containing copolymer rubber (n1) prepared in Production Example 1 and the amount of hexamethylenediamine carbamate as the cross-linking agent was changed as shown in Table 4. The results are shown in Table 4.

### [Table 4]

**Table 4**

| | | | Example | Comparative Example | |
|---|---|---|---|---|---|
| | | | 5 | 5 | 6 |
| Type of nitrile group-containing copolymer rubber | | | (n5) | (n10) | (n11) |

| Monomer composition of nitrile group-containing copolymer rubber | | | | | |
|---|---|---|---|---|---|
| | Acrylonitrile unit | (wt%) | 24 | 24 | 36 |
| | 1,3-Butadiene unit (including saturated moiety) | (wt%) | 47 | 47 | 58 |
| | Methoxyethyl acrylate unit | (wt%) | 24 | 24 | |
| | n-Butyl acrylate unit | (wt%) | | | |
| | Mono-n-butyl fumarate unit | (wt%) | 5 | | 6 |
| | Monocyclohexyl fumarate unit | (wt%) | | | |
| | Mono-n-butyl maleate unit | (wt%) | | 5 | |
| | Mono-n-butyl itaconate unit | (wt%) | | | |
| Iodine value of nitrile group-containing copolymer rubber | | | 8 | 8 | 9 |

| Formulation of cross-linkable rubber composition | | | | | |
|---|---|---|---|---|---|
| | Compounding amount of hexamethylenediamine carbamate | (parts) | 2.1 | 2.1 | 2.4 |

| Evaluation of cross-linkable rubber composition | | | | | |
|---|---|---|---|---|---|
| | Change amount of Mooney viscosity Δ ML | | 26 | 38 | 30 |

| Evaluation of cross-linked rubber | | | | | |
|---|---|---|---|---|---|
| | Cold resistance (TR10) | (° C) | -28 | -27 | -20 |

### Evaluation of Examples 5 and Comparative Examples 5 and 6

As shown in Table 4, a comparison between Example 5 and Comparative Example 5 which had the same acrylonitrile unit content reveals the following facts.

Compared to the nitrile group-containing copolymer rubber of Comparative Example 5, which contained the mono-n-butyl maleate unit instead of the fumaric acid monoester monomer unit, the nitrile group-containing copolymer rubber of Example 5, which contained specific amounts of the α, β-ethylenically unsaturated nitrile monomer unit, the fumaric acid monoester monomer unit, and the α, β-ethylenically unsaturated monocarboxylic acid ester monomer unit and had an iodine value of 120 or less, showed a reduced change amount ΔML of the Mooney viscosity when the polyamine cross-linking agent was compounded to prepare the cross-linkable rubber composition. Namely, the rubber had excellent processability. Further, the cross-linked rubber prepared from the nitrile group-containing copolymer rubber of Example 5 had excellent cold resistance.

The cross-linked rubber prepared from the nitrile group-containing copolymer rubber of Comparative Example 6, which was free of the α,β-ethylenically unsaturated monocarboxylic acid monomer unit, had poor cold resistance.

## Claims

1. A nitrile group-containing copolymer rubber comprising 10 to 30 wt% of an α,β-ethylenically unsaturated nitrile monomer unit, 1 to 10 wt% of a fumaric acid monoester monomer unit, and 1 to 50 wt% of an α,β-ethylenically unsaturated monocarboxylic acid ester monomer unit and having an iodine value of 120 or less.

2. The nitrile group-containing copolymer rubber according to claim 1, comprising 10 to 88 wt% of a conjugated diene monomer unit.

3. The nitrile group-containing copolymer rubber according to claim 2, wherein a content of the α,β-ethylenically unsaturated nitrile monomer unit is 14 to 26 wt%, a content of the fumaric acid monoester monomer unit is 4 to 6 wt%, a content of the α,β-ethylenically unsaturated monocarboxylic acid ester monomer unit is 20 to 35 wt%, and a content of the conjugated diene monomer unit is 40 to 50 wt%.

4. The nitrile group-containing copolymer rubber according to any one of claims 1 to 3, wherein a total content of α,β-ethylenically unsaturated dicarboxylic acid monoester monomer unit excluding the fumaric acid monoester monomer unit and α,β-ethylenically unsaturated polyvalent carboxylic acid monomer unit is 5 wt% or less.

5. The nitrile group-containing copolymer rubber according to claim 4, wherein the total content of the α,β-ethylenically unsaturated dicarboxylic acid monoester monomer unit excluding the fumaric acid monoester monomer unit and the α,β-ethylenically unsaturated polyvalent carboxylic acid monomer unit is 2 wt% or less.

6. A cross-linkable rubber composition comprising the nitrile group-containing copolymer rubber according to any one of claims 1 to 5 and a polyamine cross-linking agent.

7. The cross-linkable rubber composition according claim 6 further comprising a basic cross-linking accelerator having a cyclic amidine structure.

8. A cross-linked rubber prepared by cross-linking the cross-linkable rubber composition according claim 6 or 7.
